# EUROPEAN PATENT APPLICATION

(11) **EP 2 665 339 A1**
(43) Date of publication of application: **20.11.2013**
(21) Application number: 13157849.4
(22) Date of filing: 05.03.2013
(51) Int. Cl.: H05B 33/08

(54) **Power supply device, luminaire, and control method for the power supply device**

(30) Priority: 17.05.2012 JP 2012113730
(71) Applicant: Toshiba Lighting & Technology Corporation, Yokosuka-shi Kanagawa 237-8510 (JP)
(72) Inventor: Takahashi, Koji, Kanagawa 237-8510 (JP); Sato, Kazuhiko, Kanagawa 237-8510 (JP); Sakai, Kenji, Kanagawa 237-8510 (JP); Terasaka, Hiroshi, Kanagawa 237-8510 (JP); Iwai, Naoko, Kanagawa 237-8510 (JP); Nakajima, Hiromichi, Kanagawa 237-8510 (JP)
(74) Representative: Bokinge, Ole

(57) **Abstract**

According to one embodiment, a first control section controls a power supply voltage converting circuit and, if an abnormality detecting section detects an abnormality of a load, controls an output of the power supply voltage converting circuit to be stopped or reduced. A second control section gives a command to the first control section and, if the abnormality detecting section detects the abnormality of the load, controls the first control section to stop or reduce the output of the power supply voltage converting circuit.

## Description

### FIELD

Embodiments described herein relate generally to a power supply device for detecting an abnormality of a load and performing a protecting operation and a luminaire employing the power supply device.

### BACKGROUND

For example, in a power supply device that supplies electric power to a load functioning as a light source, alternating-current power is rectified by a rectifying circuit and a rectified power supply voltage is converted by a power supply voltage converting circuit and supplied to the light source to light the light source.

The power supply device includes a control section configured to control an output of the power supply voltage converting circuit and, when detecting an abnormality of the light source from a voltage, an electric current, or the like flowing to the light source, perform a protecting operation for stopping or reducing the output of the power supply voltage converting circuit.

However, if a deficiency occurs in the control section, the protecting operation is not performed even if an abnormality of the load occurs. If a microcomputer is used in the control section, there is a concern that it is likely that, because of a deficiency, a runaway, or the like of a program of the microcomputer, the protecting operation is not performed even if an abnormality of the load occurs.

### BRIEF DESCRIPTION OF THE DRAWINGS

FIG. 1 is a circuit diagram of a power supply device according to an embodiment; and
FIG. 2 is a perspective view of a luminaire in which the power supply device is used.

### DETAILED DESCRIPTION

According to an embodiment, a power supply device includes a power supply voltage converting circuit configured to convert a power supply voltage and supply the power supply voltage to a load. An abnormality detecting section detects an abnormality of the load. A first control section controls the power supply voltage converting circuit and, if the abnormality detecting section detects the abnormality of the load, controls an output of the power supply voltage converting circuit to be stopped or reduced. A second control section gives a command to the first control section and, if the abnormality detecting section detects the abnormality of the load, controls the first control section to stop or reduce the output of the power supply voltage converting circuit.

Both of the first control section and the second control section can stop or reduce the output of the power supply voltage converting circuit if the abnormality detecting section detects the abnormality of the load. Therefore, even if a deficiency occurs in one of the first control section and the second control section, the protecting operation can be surely performed by the other normal control section.

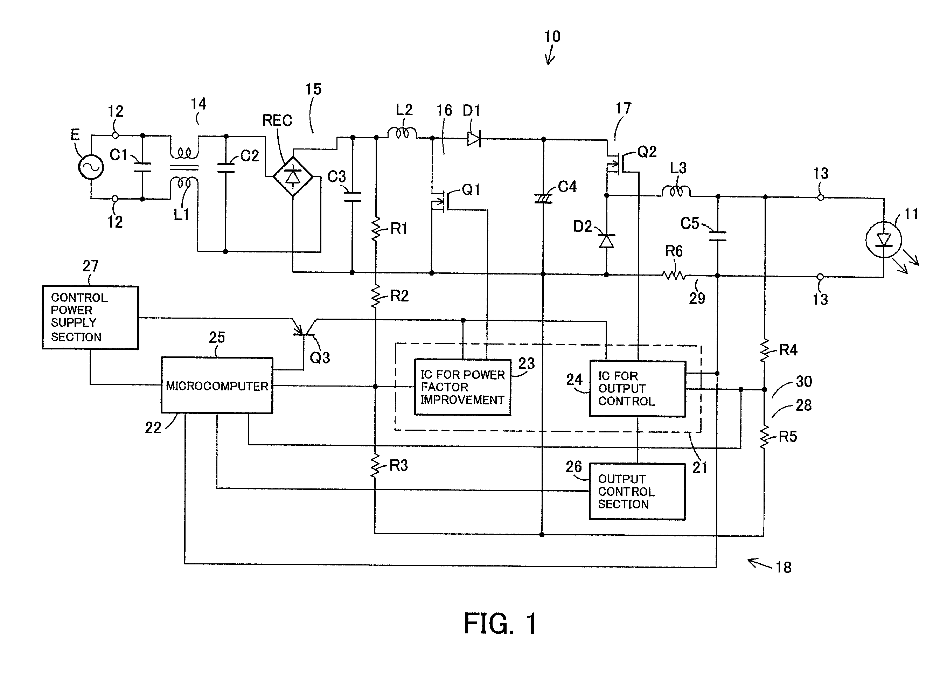

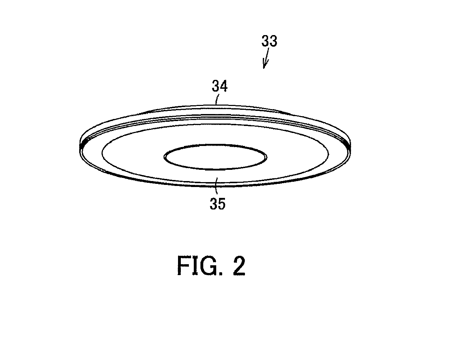

An embodiment is explained with reference to FIGS. 1 and 2.

In FIG. 1, a power supply device 10 is connected to an alternating-current power supply E, which is a commercial alternating-current power supply. The power supply device 10 supplies electric power to an LED element 11, which is a light source functioning as a load, to light the LED element 11. The power supply device 10 can be applied to luminaires including the LED element 11 such as a ceiling light, a base light, a down light, a security light, and a road light. One LED element 11 is shown in FIG. 1. However, the power supply device 10 may include a plurality of LED elements 11.

The power supply device 10 includes common input sections 12 connected to the alternating-current power supply E, output sections 13 to which the LED element 11 is connected, a filter circuit 14 connected to the input sections 12, a rectifying and smoothing circuit 15 connected to the filter circuit 14, a power factor improving circuit 16 connected to an output side of the rectifying and smoothing circuit 15, a power supply voltage converting circuit 17 connected between an output side of the power factor improving circuit 16 and the output section 13, and a control circuit 18 configured to control the power factor improving circuit 16 and the power supply voltage converting circuit 17.

The filter circuit 14 includes a capacitor C1, an inductor L1, and a capacitor C2 connected to a pair of input sections 12 in parallel. The filter circuit 14 reduces a noise component input from the alternating-current power supply E side and a noise component output to the alternating-current power supply E side.

A full-wave rectifier REC is used as the rectifying and smoothing circuit 15. An input end of the full-wave rectifier REC is connected to an output end of the filter circuit 14. A smoothing capacitor C3 is connected to an output end of the full-wave rectifier REC.

The power factor improving circuit 16 is configured by a rising voltage chopper circuit configured to step up a power supply voltage rectified and smoothed by the rectifying and smoothing circuit 15 to a predetermined power supply voltage. A series circuit of a chopper choke L2 and a switching element Q1 for power factor improvement such as a MOSFET is connected to an output end of the rectifying and smoothing circuit 15. A series circuit of a diode D1 and a smoothing capacitor C4, which is an electrolytic capacitor, is connected in parallel to the switching element Q1.

The power supply voltage converting circuit 17 is configured by a DC-DC converter such as a falling voltage chopper circuit configured to step down the power supply voltage stepped up by the power factor improving circuit 16 to a predetermined power supply voltage and output the power supply voltage to the LED element 11. The power supply voltage converting circuit 17 includes a series circuit of a switching element for output control Q2 such as a MOSFET and a diode D2 connected to both ends of the smoothing capacitor C4 in parallel. Further, the power supply voltage converting circuit 17 includes an inductor L3, an input end of which is connected between the switching element Q2 and the diode D2, and the smoothing capacitor C4 connected to an output end of the inductor L3 and connected to the output section 13 in parallel.

The control circuit 18 includes a first control section 21 configured to control the power factor improving circuit 16 and the power supply voltage converting circuit 17 and a second control section 22 configured to give a command to the first control section 21.

The first control section 21 includes an IC for power factor improvement 23 and an IC for output control 24. The IC for power factor improvement 23 is connected to a gate of the switching element Q1 and controls a switching operation of the switching element Q1. The IC for output control 24 is connected to a gate of the switching element Q2 and controls a switching operation of the switching element Q2. In FIG. 1, the IC for power factor improvement 23 and the IC for output control 24 are separately shown. However, the IC for power factor improvement 23 and the IC for output control 24 may be configured by one IC.

The second control section 22 is configured by a microcomputer 25. The second control section 22 outputs a control signal according to a predetermined control program set in advance and gives a command to the IC for output control 24 of the first control section 21 through an output control section 26.

The control circuit 18 includes a control power supply section 27 configured to convert electric power of the alternating-current power supply E into predetermined control power and supply the control power. The control power from the control power supply section 27 is supplied to the microcomputer 25 and supplied to the IC for power factor improvement 23 and the IC for output control 24 via a transistor Q3. A base of the transistor Q3 is connected to the microcomputer 25. The transistor Q3 is turned on and off according to the control by the microcomputer 25, whereby the control circuit 18 controls supply and a stop of the control power to the IC for power factor improvement 23 and the IC for output control 24.

Resistors R1, R2, and R3 are connected between a connecting point of the smoothing capacitor C3 and the chopper choke L2 and a ground line. A connecting point of the resistor R2 and the resistor R3 is connected to the IC for power factor improvement 23 and the microcomputer 25. Consequently, the IC for power factor improvement 23 and the microcomputer 25 detect a rectified and smoothed power supply voltage.

Resistors R4 and R5, which configure a voltage detecting section 28, are connected between a connecting point of the inductor L3 and a capacitor C5 and the ground line. A connecting point of the resistor R4 and the resistor R5 is connected to the IC for output control 24 and the microcomputer 25. The voltage detecting section 28 detects a voltage of the LED element 11 (or a voltage proportional to the voltage of the LED element 11) and inputs the voltage to the IC for output control 24 and the microcomputer 25.

A resistor R6, which configures a current detecting section 29, is connected between an anode of the diode D2 and the capacitor C5. A connecting point of the resistor R6 and the capacitor C5 is connected to the IC for output control 24 and the microcomputer 25. The current detecting section 29 detects an electric current of the LED element 11 (or an electric current proportional to the electric current of the LED element 11) and inputs the electric current to the IC for output control 24 and the microcomputer 25.

The voltage detecting section 28 and the current detecting section 29 are configured as an abnormality detecting section 30 configured to detect an abnormality of the LED element 11.

If the abnormality detecting section 30 detects an abnormality of the LED element 11, the IC for output control 24 controls an output of the power supply voltage converting circuit 17 to be stopped or reduced. That is, if a voltage value or a current value detected by the voltage detecting section 28 reaches a first threshold set in advance, the IC for output control 24 controls the output of the power supply voltage converting circuit 17 to be stopped or reduced.

If the abnormality detecting section 30 detects the abnormality of the LED element 11, the microcomputer 25 controls, with the first control section 21, the output of the power supply voltage converting circuit 17 to be stopped or reduced. That is, if the voltage value or the current value detected by the current detecting section 29 reaches a second threshold set in advance, the microcomputer 25 controls, with the first control section 21, the output of the power supply voltage converting circuit 17 to be stopped or reduced.

In the case of a voltage, since the voltage rises or falls because of occurrence of an abnormality such as a short circuit of the LED element 11, each of the first threshold and the second threshold is set to both of a voltage value on an upper limit side higher than a voltage value at normal time and a voltage value on a lower limit side lower than the voltage value at normal time. In the case of an electric current, since no problem occurs even if the electric current of the LED element 11 decreases, each of the first threshold and the second threshold is set to only a current value on an upper limit side higher than a current value at normal time.

The first threshold and the second threshold may be set to any one of different threshold levels and the same threshold level. In the case of the different threshold levels, a threshold level of the first threshold may be set to either a threshold level lower than a threshold level of the second threshold or a threshold level higher than the threshold level of the second threshold.

A luminaire 33 including the power supply device 10 is shown in FIG. 2. The luminaire 33 is a ceiling light and includes a disc-like luminaire main body 34 and a globe 35 configured to cover the entire lower surface of the luminaire main body 34. On the lower surface of the luminaire main body 34, an LED module including the LED element 11, a reflector configured to control luminous intensity distribution of light generated by the LED element 11, the power supply device 10 housed in the reflector, and the like are arranged.

The operation of the power supply device 10 is explained.

When the alternating-current power supply E is turned on, a power supply voltage rectified by the full-wave rectifier REC and smoothed by the smoothing capacitor C3 is input to the power factor improving circuit 16 through the filter circuit 14.

In the power factor improving circuit 16, the switching element Q1 is turned on and off at a switching frequency set in advance by the IC for power factor improvement 23. Consequently, the rectified and smoothed power supply voltage is stepped up to a predetermined power supply voltage. Further, the stepped-up power supply voltage is smoothed by the smoothing capacitor C4 and supplied to the power supply voltage converting circuit 17.

In the power supply voltage converting circuit 17, the switching element Q2 is turned on and off at a switching frequency set in advance by the IC for output control 24. Consequently, the power supply voltage supplied to the power supply voltage converting circuit 17 is stepped down to the predetermined power supply voltage. The stepped-down power supply voltage is supplied to the LED element 11 and the LED element 11 is lit.

During the lighting of the LED element 11, the IC for output control 24 acquires a voltage and an electric current of the LED element 11 detected by the voltage detecting section 28 and the current detecting section 29. The IC for output control 24 feedback-controls the switching element Q2 such that the voltage and the electric current of the LED element 11 reach target values.

The microcomputer 25 also acquires the voltage and the electric current of the LED element 11 detected by the voltage detecting section 28 and the current detecting section 29. The microcomputer 25 gives a command to the IC for output control 24.

The operation of the LED element 11 during occurrence of an abnormality is explained.

For example, it is assumed that an abnormality is determined from a voltage of the LED element 11. It is assumed that, if the voltage of the LED element 11 at normal time is 2 V, the upper limit side of the second threshold of the microcomputer 25 is set to 3 V and the lower limit side thereof is set to 1.5 V and the upper limit side of the first threshold of the IC for output control 24 is set to 4 V and the lower limit side thereof is set to 1 V.

During the operation of the power supply device 10, the microcomputer 25 monitors whether the voltage of the LED element 11 detected by the power detecting section 28 reaches the second threshold. The IC for output control 24 monitors whether the voltage of the LED element 11 detected by the voltage detecting section 28 reaches the first threshold.

During the operation of the power supply device 10, the control power is supplied to the microcomputer 25 and the microcomputer 25 is operating. Further, if the voltage of the LED element 11 is normal, the microcomputer 25 gives a single of an L level to the base of the transistor Q3. The transistor Q3 is on. The control power is supplied to the IC for power factor improvement 23 and the IC for output control 24 through the transistor Q3. The IC for power factor improvement 23 and the IC for output control 24 are operating.

If an abnormality such as a short circuit occurs in the LED element 11, the voltage of the LED element 11 rises. If the microcomputer 25 determines that the voltage of the LED element 11 reaches the second threshold (3 V), the microcomputer 25 performs a protecting operation. In the protecting operation by the microcomputer 25, a signal given from the microcomputer 25 to the base of the transistor Q3 is switched to an H level to turn off the transistor Q3 and shut off the supply of the control power to the IC for power factor improvement 23 and the IC for output control 24. Consequently, the operation of the IC for power factor improvement 23 and the IC for output control 24 is stopped.

If, because of a deficiency of the program of the microcomputer 25, the transistor Q3 cannot be turned off even if the voltage of the LED element 11 reaches the second threshold (3 V), the voltage of the LED element 11 further rises. If the IC for output control 24 determines that the voltage of the LED element 11 reaches the first threshold (4 V), the IC for output control 24 performs a protecting operation. In the protecting operation by the IC for output control 24, the IC for output control 24 controls the output of the switching element Q2 to be stopped or reduced. Consequently, the IC for output control 24 stops the output from the switching element Q2 to the LED element 11 or suppresses the rise in the voltage of the LED element 11.

If an abnormality such as a drop of the voltage of the LED element 11 occurs, the microcomputer 25 and the IC for output control 24 perform the same protecting operations in this order.

As explained above, if the abnormality of the LED element 11 occurs, even if a deficiency occurs in the microcomputer 25, the protecting operation can be surely performed by the IC for output control 24.

The level of the second threshold of the microcomputer 25 and the level of the first threshold of the IC for output control 24 may be set opposite. That is, the upper limit side of the first threshold of the IC for output control 24 may be set to 3 V and the lower limit side thereof may be set to 1.5 V and the upper limit side of the second threshold of the microcomputer 25 may be set to 4 V and the lower limit side thereof may be set to 1 V. In this case, if the abnormality of the LED element 11 occurs, first, the IC for output control 24 performs the protecting operation and, if the IC for output control 24 cannot perform the protecting operation, the microcomputer 25 performs the protecting operation. In this way, if the abnormality of the LED element 11 occurs, even if a deficiency occurs in the IC for output control 24, the protecting operation can be surely performed by the microcomputer 25.

If an abnormality is determined from an electric current of the LED element 11, it is possible to perform the protecting operation in the same manner by setting a second threshold of the microcomputer 25 and a first threshold of the IC for output control 24 for the electric current of the LED element 11 at normal time. In this case, likewise, a threshold level of one of the second threshold of the microcomputer 25 and the first threshold of the IC for output control 24 is set low and a threshold level of the other is set high. Consequently, if the protecting operation cannot be performed by one of the microcomputer 25 and the IC for output control 24, the protecting operation can be performed by the other.

As explained above, in the power supply device 10 according to this embodiment, both of the first control section 21 and the second control section 22 can stop or reduce the output of the power supply voltage converting circuit 17 if the abnormality detecting section 30 detects the abnormality of the LED element 11. Therefore, since the power supply device 10 has a double protecting function, even if a deficiency occurs in one of the first control section 21 and the second control section 22, the protecting operation can be surely performed by the normal other control section.

If the voltage value or the current value detected by the voltage detecting section 28 or the current detecting section 29 reaches the first threshold set in advance, the IC for output control 24 controls the output of the power supply voltage converting circuit 17 to be stopped or reduced. If the voltage value or the current value detected by the voltage detecting section 28 or the current detecting section 29 reaches the second threshold set in advance, the microcomputer 25 controls the output of the power supply voltage converting circuit 17 to be stopped. Therefore, even if a deficiency occurs in one of the IC for output control 24 and the microcomputer 25, the protecting operation can be surely performed by the normal other.

By setting the first threshold and the second threshold to different threshold levels, even if a deficiency occurs in one of the IC for output control 24 and the microcomputer 25, the protecting operation can be more surely performed by the normal other.

The first threshold and the second threshold may be set to the same threshold level. In this case, even if a deficiency occurs in one of the IC for output control 24 and the microcomputer 25, the protecting operation can be surely performed by the normal other.

The load is not limited to the LED element 11 and may be other light sources such as an EL element or may be electric devices other than the light sources.

While certain embodiments have been described, these embodiments have been presented by way of example only, and are not intended to limit the scope of the inventions. Indeed, the novel embodiments described herein may be embodied in a variety of other forms; furthermore, various omissions, substitutions, and changes in the form of the embodiments described herein may be made without departing from the spirit of the inventions. The accompanying claims and their equivalents are intended to cover such forms or modifications as would fall within the scope and spirit of the inventions.

## Claims

1. A power supply device comprising:
a power supply voltage converting circuit (17) configured to convert a power supply voltage and supply the power supply voltage to a load (11);
an abnormality detecting section (30) configured to detect an abnormality of the load (11);
a first control section (21) configured to control the power supply voltage converting circuit (17) and, if the abnormality detecting section (30) detects the abnormality of the load (11), control an output of the power supply voltage converting circuit (17) to be stopped or reduced; and
a second control section (22) configured to give a command to the first control section (21) and, if the abnormality detecting section (30) detects the abnormality of the load (11), control the first control section (21) to stop or reduce the output of the power supply voltage converting circuit (17).

2. The device according to claim 1, wherein
the abnormality detecting section (30) is a voltage detecting section (28) configured to detect a voltage of the load (11),
if a voltage value detected by the voltage detecting section (28) reaches a first threshold set in advance, the first control section (21) controls the output of the power supply voltage converting circuit (17) to be stopped or reduced, and
if the voltage value detected by the voltage detecting section (28) reaches a second threshold set in advance, the second control section (22) controls the first control section (21) to stop or reduce the output of the power supply voltage converting circuit (17).

3. The device according to claim 1, wherein
the abnormality detecting section (30) is a current detecting section (29) configured to detect an electric current of the load (11),
if a current value detected by the current detecting section (29) reaches a first threshold set in advance, the first control section (21) controls the output of the power supply voltage converting circuit (17) to be stopped or reduced, and
if the current value detected by the current detecting section (29) reaches a second threshold set in advance, the second control section (22) controls the first control section (21) to stop or reduce the output of the power supply voltage converting circuit (17).

4. The device according to claim 2 or 3, wherein the first threshold and the second threshold are at different threshold levels.

5. The device according to claim 2 or 3, wherein the first threshold and the second threshold are at a same threshold level.

6. A luminaire comprising:
the power supply device (10) according to any one of claims 1 to 5; and
a light source (11) functioning as the load.
